(19) Europäisches Patentamt / European Patent Office / Office européen des brevets

(11) **EP 4 247 892 B1**

(12) **EUROPEAN PATENT SPECIFICATION**

(45) Date of publication and mention
of the grant of the patent:
**18.12.2024  Bulletin 2024/51**

(21) Application number: **21801140.1**

(22) Date of filing: **03.11.2021**

(51) International Patent Classification (IPC):
***C08L 23/06*** *(2006.01)*

(52) Cooperative Patent Classification (CPC):
(C-Sets available)
**C08L 23/06;** C08L 2203/162; C08L 2205/025

(Cont.)

(86) International application number:
**PCT/EP2021/080481**

(87) International publication number:
**WO 2022/106201 (27.05.2022 Gazette 2022/21)**

(54) **PEELABLE COMPOSITION**

ABZIEHBARE ZUSAMMENSETZUNG

COMPOSITION PELABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.11.2020  EP 20208010**

(43) Date of publication of application:
**27.09.2023  Bulletin 2023/39**

(73) Proprietor: **Basell Poliolefine Italia S.r.l.
20121 Milano (IT)**

(72) Inventors:
• **IZZI, Marco
60325 Frankfurt/M. (DE)**
• **MUSACCHI, Gianluca
44122 Ferrara (IT)**

(74) Representative: **LyondellBasell
c/o Basell Poliolefine Italia
Intellectual Property
P.le Donegani 12
44122 Ferrara (IT)**

(56) References cited:
**WO-A1-2011/064119     WO-A1-2011/064131
WO-A1-2015/178927     WO-A1-2018/211107**

EP 4 247 892 B1

(52) Cooperative Patent Classification (CPC): (Cont.)

C-Sets
**C08L 23/06, C08L 23/08, C08L 23/20, C08L 23/20**

C-Sets
**C08L 23/06, C08L 23/08, C08L 23/20, C08L 23/20**

**Description**

FIELD OF THE INVENTION

The present disclosure relates to a composition of polybutene polymers fit for producing easy opening films

BACKGROUND OF THE INVENTION

Heat sealable and easy-opening films are employed on a large scale for temporarily closing containers that include, for example, food products. During use, a consumer tears away the peelable film. To gain consumer acceptance, a number of characteristics associated with a heat sealable and peelable film are desired.

Heat sealable films must be capable of being sealed upon the application of heat. During typical sealing processes, the backing or web layer of the film comes into direct contact with a heated surface such as a sealing jaw. Heat is thus transferred through the backing layer of the film to melt and fuse the inner sealant layer to form a seal. Accordingly the backing layer generally has a higher melting temperature than the inner sealant layer so that the backing layer of the film does not substantially melt and therefore does not stick to the heated surface.

To have a low heat seal initiation temperature is desirable for the reason that it helps to ensure fast packaging line speeds and a broad sealing window which could accommodate variability in process conditions, such as pressure and temperature. A broad sealing window also enables high speed packaging of heat sensitive products, as well as, provides a degree of forgiveness for changes in packaging or filling speeds.

It also desirable that the pealing force at room temperature be not too high so that the film can be pealed manually.

Thus there are two different needs, a low sealing temperature for packaging line speed and a right peeling force at room temperature for easy pealing.

WO 2015/061440 described a composition suitable for use as a peelable seal layer comprising from 50 to 90 wt% of a propylene based polymer and from 10 to 50 wt% of a secondo polymer which has interfacial adhesion with the first polymer of less than 0.18 N/mm.

The applicant found that it is possible to obtain an improved curve sealing temperature-peeling force by using a composition of 1-butene based copolymer, in order to achieve a lower sealing initiation temperature.

SUMMARY OF INVENTION

Thus an object of the present disclosure is a polymer composition comprising a 1-butene copolymer, said composition comprising:

A) from 75.0 wt% to 95.0 wt% of a polymer composition (A) comprising:

A1) From 56 wt% to 77 wt% of a propylene ethylene copolymer having:

i) a Melt Flow Rate: measured according to ISO 1133-1 (230 °C, 2.16 Kg) ranging from 5.1 to 10.0 g/10 min;
ii) density measured according to ISO 1183-1 ranging from 0.85 g/cm$^3$ to 0.96 g/cm$^3$;
iii) flexural modulus measured according to ISO 178 ranging from 350 MPa to 550 MPa;
iv) ethylene derived units content ranging from 4.5 wt% to 7.2 wt%;

A2) from 15 wt% to 32 wt% of a low density polyethylene having:

i) a Melt Flow Rate: measured according to ISO 1133-1 (190 °C, 2.16 Kg) ranging from 0.33 to 8.0 g/10 min;
ii) density measured according to ISO 1183-1 ranging from 0.915 g/cm$^3$ to 0.938 g/cm$^3$;
iii) tensile modulus measured according to ISO 527-2 ranging from 210 MPa to 430 MPa;

A3) from 4 wt% to 17 wt% of a 1-butene homopolymer having:

i) a Melt Flow Rate: measured according to ISO 1133-1 (190 °C, 2.16 Kg) ranging from 0.1 to 2.0 g/10 min;
ii) density measured according to ISO 1183-1 ranging from 0.905 g/cm$^3$ to 0.927 g/cm$^3$;
iii) flexural modulus measured according to ISO 178 ranging from 320 MPa to 580 MPa;
the sum of the amounts of A1, A2 and A3 being 100 wt%;

B) from 5.0 wt% to 25.0 wt% of a copolymer of 1-butene and ethylene containing from 2.8 wt% to 4.2 wt% of ethylene derived units; said copolymer of 1-butene and ethylene having:

- a Melt Flow Rate: measured according to ISO 1133-1 -(190 °C, 2.16 Kg) ranging from 1.0 to 5.5 g/10 min;

  Flexural modulus measured according to ISO 178 ranging from 50 MPa to 250 MPa;
  The melting temperature measured according to iso 11357-3 ranging from 83°C and 108 °C.
  the sum of the amounts of A) and B) being 100 wt%.

DETAILED DESCRIPTION OF THE INVENTION

Thus an object of the present disclosure is a 1-butene copolymer composition comprising:

A) from 75.0 wt% to 95.0 wt% preferably from 80.2 wt% to 90.4 wt%; more preferably from 83.0 wt% to 87.7 wt% of a polymer composition (A) comprising:

A1) From 56 wt% to 77 wt%; preferably from 60 wt% to 73 wt%; more preferably from 63 wt% to 70 wt% of a propylene ethylene copolymer having:

   i) Melt Flow Rate: measured according to ISO 1133-1 -(230 °C, 2.16 Kg) ranging from 5.1 to 10.0 g/10 min; preferably ranging from 5.8 to 8.5 g/10 min;
   ii) density measured according to ISO 1183-1 ranging from 0.85 $g/cm^3$ to 0.96 $g/cm^3$;preferably ranging from 0.87 $g/cm^3$ to 0.93 $g/cm^3$;
   iii) flexural modulus measured according to ISO 178 ranging from 350 MPa to 550 MPa; preferably ranging from 400 MPa to 400 MPa;
   iv) ethylene derived units content content ranging from 4.5 wt% to 7.2 wt%; preferably from 4.8wt% to 7.0 wt%; more preferably from 5.5 wt% to 6.7 wt%;

A2) from 15 wt% to 32 wt% preferably from 18 wt% to 28 wt%; more preferably from 20 wt% to 15 wt% of a low density polyethylene having:

   i) a Melt Flow Rate: measured according to ISO 1133-1 (190 °C, 2.16 Kg) ranging from 0.33 to 8.0 g/10 min; preferably ranging from 1.0 to 5.0 g/10 min; more preferably ranging from 1.2 to 3.5 g/10 min;
   ii) density measured according to ISO 1183-1 ranging from 0.915 $g/cm^3$ to 0.938 $g/cm^3$; preferably ranging from 0.921 $g/cm^3$ to 0.933 $g/cm^3$; more preferably ranging from 0.924 $g/cm^3$ to 0.931 $g/cm^3$;
   iii) tensile modulus measured according to ISO 527-1, -2 ranging from 210 MPa to 430 MPa; preferably ranging from 230 MPa to 400 MPa; more preferably ranging from 250 MPa to 350 MPa;

A3) from 4 wt% to 17 wt%; preferably from 6 wt% to 14 wt%; more preferably from 8 wt% to 12 wt% of a 1-butene homopolymer having:

   i) a Melt Flow Rate: measured according to ISO 1133-1 (190 °C, 2.16 Kg) ranging from 0.1 to 2.0 g/10 min; preferably ranging from 0.2 to 1.0 g/10 min; more preferably ranging from 0.2 to 0.8 g/10 min;
   ii) density measured according to ISO 1183-1 ranging from 0.905 $g/cm^3$ to 0.927 $g/cm^3$; preferably ranging from 0.908 $g/cm^3$ to 0.922 $g/cm^3$; more preferably ranging from 0.910 $g/cm^3$ to 0.918 $g/cm^3$;
   iii) flexural modulus measured according to ISO 178 ranging from 320 MPa to 580 MPa; preferably ranging from 380 MPa to 520 MPa; more preferably ranging from 400 MPa to 500 MPa;
   the sum of the amounts of A1, A2 and A3 being 100 wt%;

B) from 5.0 wt% to 25.0 wt%; preferably from 9.6 wt% to 19.8 wt%; more preferably from 12.3 wt% to 17.0 wt% of a copolymer of 1-butene and ethylene containing from 2.8 wt% to 4.2 wt% preferably from 3.0 wt% to 4.0 wt%; more preferably from 3.2 wt% to 3.9 wt% of ethylene derived units; said copolymer of 1-butene and ethylene having:

- a Melt Flow Rate: measured according to ISO 1133-1 -(190 °C, 2.16 Kg) ranging from 1.0 to 5.5 g/10 min preferably from 2.1 to 4.8 g/10 min; more preferably from 2.6 to 4.1 g/10 min;

  Flexural modulus measured according to ISO 178 ranging from 50 MPa to 250 MPa; preferably ranging from 90 MPa to 210 MPa; more preferably ranging from 95 MPa, to 174 MPa
  The melting temperature measured according to Iso 11357-3 ranging from 83°C and 108 °C, preferably ranging from 84°C and 103 °C; more preferably ranging from 99°C and 100 °C.
  the sum of the amounts of A) and B) being 100 wt%.

The term "copolymer" as used in the present patent application refers to polymers containing only two comonomers such as propylene and ethylene or 1-butene and ethylene .

Preferably component A) has the following features:

i) a Melt Flow Rate: measured according to ISO 1133-1 (230 °C, 2.16 Kg) ranging from 2.0 to 12 g/10 min; preferably ranging from 4.0 to 10.0 g/10 min;

ii) density measured according to ISO 1183-1 ranging from 0.890 g/cm$^3$ to 0.920 g/cm$^3$; preferably ranging from 0.895 g/cm$^3$ to 0.9120 g/cm$^3$; more preferably ranging from 0.898 g/cm$^3$ to 0.908 g/cm$^3$.

Component A) can optionally contains from 0.5wt% to 2.0 wt%; preferably from 0.7 wt% to 1.5 wt% of a masterbatch such as Premix Antiblocking PP45.

The 1-butene copolymer composition of the present disclosure can be advantageously used for the preparation of films, in particular multilayer films wherein the sealing layer comprises the 1-butene copolymer composition of the present disclosure.

Thus a further object of the present disclosure is a film comprising the 1-butene copolymer composition of the present disclosure in particular a further object of the present disclosure is a multilayer film wherein the sealing layer comprises the 1-butene copolymer composition of the present disclosure.

The multilayer films of the present disclosure are characterized by having at least the sealing layer comprising the 1-butene copolymer composition of the present disclosure. The remaining layers can be formed of any material known in the art for use in multilayer films or in laminated products. Thus, for example, each layer can be formed of a polypropylene homopolymer or copolymer or polyethylene homopolymer or copolymer or other kind of polymers such as EVA.

The combination and number of the layers of the multilayer structure is not particularly limited. The number is usually from 3 to 11 layers or even more, preferably 3 to 9 layers, and more preferably 3 to 7 layers, and more preferably 3 to 5 layers and combinations including C/B/A, C/B/C/B/A, C/B/C/D/C/B/A are possible, provided that at least one sealing layer A comprises the 1-butene copolymer composition of the present disclosure.

Preferred layers of the multilayer film of the present disclosure are 3 or 5 wherein at sealing layer comprises, preferably consists essentially of the 1-butene copolymer composition of the present disclosure. Wherein the term "consists essentially of" means that specific further components can be present, namely those not materially affecting the essential characteristics of the compound or composition. In particular no further polymers are present in the composition.

The 1-butene copolymer composition of the present disclosure can be prepared by mechanically blend component A) and component B) in accordance with processes well known in the art.

Component A) and component B) are commercially available in the market.

Component A1) can be for example Clyrell RC112L sold by LyondellBasell;
Component A2) can be for example Lupolen, 3020H sold by LyondellBasell;
Component A3) can be for example PB 0110M sold by LyondellBasell;

Component B) is a 1-butene ethylene copolymer commercially available, such as Koattro DP 8310M sold by LyondellBasell.

The 1-butene copolymer composition of the present disclosure can further contain additives used in the art.

The 1-butene copolymer composition of the present disclosure can be advantageously used as sealing layer in a multilayer film, it allows to obtain the same peeling force at lower sealing temperature, so that the processability of the final container to which the sealing film is applied results to be improved.

The following examples are given to illustrate but not limit the present disclosure

EXAMPLES

Melt Flow Rate: measured according to ISO 1133 - 1 (230 °C, 2.16 Kg or 190°C, 2.16 Kg).

Tensile Modulus was measured according to ISO 527-2, and ISO 1873-2 on injection moulded sample.

Density was measured according to ISO 1183-1.

The density of samples was measured according to ISO 1183-1 (ISO 1183-1 method A "Methods for determining the density of non-cellular plastics- Part 1: Immersion method, liquid pyknometer method and titration method"; Method A: Immersion method, for solid plastics (except for powders) in void-free form). Test specimens were taken from compression moulded plaques conditioned for 10 days before carrying out the density measure.

Flexural Modulus according to ISO 178, and supplemental conditions according to ISO 1873-2.

Melting temperature was measured according ISO 11357-3.

Determination of ethylene (C2) content by NMR in a propylene ethylene copolymer

$^{13}$C NMR spectra were acquired on a Bruker AV-600 spectrometer equipped with cryoprobe, operating at 160.91 MHz in the Fourier transform mode at 120°C. Ethylene has been measured on the total composition. The ethylene content of component B) has been calculated by using the amount of component B) according to the following equation:

$$C_{2tot} = C_{2B} \ X \ wt\%compB/100.$$

The samples were dissolved in 1,1,2,2-tetrachloroethane-d2 at 120°C with an 8% wt/v concentration. Each spectrum was acquired with a 90° pulse, 15 seconds of delay between pulses and CPD to remove $^1$H-$^{13}$C coupling. 512 transients were stored in 32K data points using a spectral window of 9000 Hz.

The peak of the $S\beta\beta$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-d2 at 120 °C with a 8 % wt/v concentration. Each spectrum was acquired with a 90° pulse, and 15 seconds of delay between pulses and CPD to remove $^1$H-$^{13}$C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with $\delta$-titanium trichloride-diethylaluminum chloride" M. Kakugo, Y. Naito, K. Mizunuma and T. Miyatake, Macromolecules, 1982, 15, 1150) using the following equations:

$$PPP = 100 \ T\beta\beta/S \qquad PPE = 100 \ T\beta\delta/S \qquad EPE = 100 \ T\delta\delta/S$$

$$PEP = 100 \ S\beta\beta/S \qquad PEE = 100 \ S\beta\delta/S \qquad EEE = 100 \ (0.25 \ S\gamma\delta + 0.5 \ S\delta\delta)/S$$

$$S = T\beta\beta + T\beta\delta + T\delta\delta + S\beta\beta + S\beta\delta + 0.25 \ S\gamma\delta + 0.5 \ S\delta\delta$$

The molar percentage of ethylene content was evaluated using the following equation:

E% mol = 100 * [PEP+PEE+EEE]The weight percentage of ethylene content was evaluated using the following equation:

$$E\% \ mol \ * \ MWE$$

$$E\% \ wt. = E\% \ mol \ * \ MWE \ + \ P\% \ mol \ * \ MWP$$

where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, Macromolecules, 1977; 10, 536) as:

$$r_1r_2 = 1 + \left( \frac{EEE + PEE}{PEP} + 1 \right) - \left( \frac{P}{E} + 1 \right) \left( \frac{EEE + PEE}{PEP} + 1 \right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

The ethylene content of component B) has been calculated from the total ethylene content by using the following equation:

$$E\%wt\ total = E\%wt/B*wt\%B$$

Wherein E%wt total is the total ethylene content E%wt/B is the ethylene content of component B) and wt%B is the amount (wt%/100) of component B).

Ethylene conent in a 1-butene ethylene copolymer

The content of comonomers was determined by infrared spectroscopy by collecting the IR spectrum of the sample vs. an air background with a Fourier Transform Infrared spectrometer (FTIR). The instrument data acquisition parameters were:

- purge time: 30 seconds minimum
- collect time: 3 minutes minimum
- apodization: Happ-Genzel
- resolution: 2 cm$^{-1}$.

*Sample Preparation* - Using a hydraulic press, a thick sheet was obtained by compression molding about g 1 of sample between two aluminum foils. A small portion was cut from this sheet to mold a film. The film thickness was set in order to have a maximum absorbance of the $CH_2$ absorption band recorded at ~720 cm$^{-1}$ of 1.3 a.u. (% Transmittance > 5%). Molding conditions were $180\pm10°C$ (356°F) and pressure was around 10 kg/cm$^2$ (142.2 PSI) for about one minute. The pressure was then released, the sample removed from the press and cooled to room temperature. The spectrum of pressed film sample was recorded in absorbance vs. wavenumbers (cm$^{-1}$). The following measurements were used to calculate ethylene ($C_2$) and 1-butene ($C_4$) contents:

a) Area (At) of the combination absorption bands between 4482 and 3950 cm$^{-1}$ which is used for spectrometric normalization of film thickness.
b) Area ($A_{C2}$) of the absorption band due to methylenic sequences ($CH_2$ rocking vibration) in the range 660 to 790 cm$^{-1}$ after a proper digital subtraction of an isotactic polypropylene (IPP) and a $C_2C_4$ references spectrum.
c) The factor of subtraction ($FCR_{C4}$) between the spectrum of the polymer sample and the $C_2C_4$ reference spectrum The reference spectrum is obtained by digital subtraction of a linear polyethylene from a $C_2C_4$ copolymer, in order to extract the $C_4$ band (ethyl group at ~771 cm-1).

The ratio $A_{C2}$ / At is calibrated by analyzing ethylene-1-butene standard copolymers of known compositions, determined by NMR spectroscopy. In order to calculate the ethylene ($C_2$) and 1-butene ($C_4$) content, calibration curves were obtained by using samples of known amount of ethylene and 1-butene detected by $^{13}$C-NMR.
Calibration for ethylene - A calibration curve was obtained by plotting $A_{C2}/A_t$ versus ethylene molar percent (%C2m), and the coefficient $a_{C2}$, $b_{C2}$ and $c_{C2}$ then calculated from a "linear regression".
Calibration for 1-butene - A calibration curve was obtained by plotting FCRca/Ac versus butane molar percent (%Cam) and the coefficients $a_{C4}$, $b_{C4}$ and $C_{C4}$ then calculated from a "linear regression".
The spectra of the unknown samples are recorded and then (At), ($A_{C2}$) and ($FCR_{C4}$) of the unknown sample are calculated.
The ethylene content (% molar fraction C2m) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction C4m) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

$a_{C4}$, $b_{C4}$, $c_{C4}$ $a_{C2}$, $b_{C2}$, $c_{C2}$ are the coefficients of the two calibrations.
Changes from mol% to wt% are calculated by using molecular weights.

**Components A and B**

Component A contains: 66.9 wt% of Clyrell RC 112L a random propylene ethylene copolymer; 22 wt% of Lupolen 3020H a linear low density polyethylene; 10 wt% of PB 0110M a 1-butene homopolymer all commercial grades sold by Lyondellbasell, 1 wt% masterbatch and 0.1 wt% standard additives.

Component B is a commercial product sold by Lyondelbasell under the tradename Koattro DP 8310M.

The features of components A are reported on table 1

Table 1

| | | A1 | A2 | A3 |
|---|---|---|---|---|
| MFR 230°C 2.16 kg | g/10 min | 7.0 | - | - |
| MFR 190°C 2.16 kg | g/10 min | - | 2.0 | 0.4 |
| Density | g/cm$^3$ | 0.90 | 0.928 | 0.914 |
| Flexural modulus | MPa | 450 | - | 450 |
| Ethylene content | Wt% | 6.1 | - | - |
| Tensile modulus | MPa | - | 300 | - |

The features of components A and B are reported on table 2

Table 2.

| | | Component A | Component B |
|---|---|---|---|
| MFR 230°C 2.16 kg | g/10 min | 6.0 | - |
| MFR 190°C 2.16 kg | g/10 min | - | 3.5 |
| Density | g/cm$^3$ | 0.902 | - |
| Flexural modulus | MPa | - | 120 |
| Tm | °C | - | 94 |
| Ethylene content | Wt% | - | 3.7 |

**Example 1**

Component A has been blended with component B (85wt% A; 15 wt% B) and a 35 micron cast film has been obtained. The cast film has been sealed at different sealing temperature on itself. For each sealing temperature the peeling force has been measured.

**Comparative example 2**

In comparative example 2 the blend of 85 wt% of A and 15 wt% of B has been replaced with 100 wt% of A.

Table 3 shows the peeling forces at various sealing temperatures.

Table 3

| | | Example 1 | | Comparative Ex 2 |
|---|---|---|---|---|
| Sealing temp °C | Max force N | Failure mode | Max force N | Failure mode |
| 130 | 5,1 | peel | 4,1 | peel |
| 140 | 8,2 | elongation & break | 5,6 | elongation & peel |
| 150 | 8,1 | elongation & break | 5,7 | elongation & peel |
| 160 | 8,3 | elongation & break | 8,5 | elongation & break |
| 180 | 8,0 | elongation & break | 8,9 | elongation & break |

Component A) is sold for obtaining seal peel solution typically used in cast or blow film application. From table 2 results clearly that the composition of the present disclosure achieve the same peeling force at a lower sealing temperature.

**Claims**

1. A polymer composition comprising a 1-butene copolymer, said composition comprising:

   A) from 75.0 wt% to 95.0 wt% of a polymer composition (A) comprising:

   A1) From 56 wt% to 77 wt% of a propylene ethylene copolymer having:

   i) a Melt Flow Rate: measured according to ISO 1133-1 -(230 °C, 2.16 Kg) ranging from 5.1 to 10.0 g/10 min;
   ii) density measured according to ISO 1183-1 ranging from 0.85 g/cm$^3$ to 0.96 g/cm$^3$;
   iii) flexural modulus measured according to ISO 178 ranging from 350 MPa to 550 MPa;
   iv) ethylene content ranging from 4.5 wt% to 7.2 wt%;

   A2) from 15 wt% to 32 wt% of a low density polyethylene having:

   i) a Melt Flow Rate: measured according to ISO 1133-1 (190 °C, 2.16 Kg) ranging from 0.33 to 8.0 g/10 min;
   ii) density measured according to ISO 1183-1 ranging from 0.915 g/cm$^3$ to 0.938 g/cm$^3$;
   iii) tensile modulus measured according to ISO 527-2 ranging from 210 MPa to 430 MPa;

   A3) from 4 wt% to 17 wt% of a 1-butene homopolymer having:

   i) a Melt Flow Rate: measured according to ISO 1133-1 (190 °C, 2.16 Kg) ranging from 0.1 to 2.0 g/10 min;
   ii) density measured according to ISO 1183-1 ranging from 0.905 g/cm$^3$ to 0.927 g/cm$^3$;
   iii) flexural modulus measured according to ISO 178 ranging from 320 MPa to 580 MPa;
   the sum of the amounts of A1, A2 and A3 being 100 wt%;

   B) from 5.0 wt% to 25.0 wt% of of a copolymer of 1-butene and ethylene containing from 2.8 wt% to 4.2 wt% of ethylene derived units; said copolymer of 1-butene and ethylene having:

   - a Melt Flow Rate: measured according to ISO 1133-1 -(190 °C, 2.16 Kg) ranging from 1.0 to 5.5 g/10 min;
   - Flexural modulus measured according to ISO 178 ranging from 50 MPa to 250 MPa;
   - The melting temperature measured according to Iso 11357-3 ranging from 83°C and 108 °C, form I

   the sum of the amounts of A) and B) being 100 wt%.

2. The polymer composition according to claim 1 wherein component A ranges from 80.2 wt% to 90.4 wt% and component B) ranges from 9.6 wt% to 19.8 wt%.

3. The polymer composition according to claims 1 or 2 wherein:

   Component A1 ranges from 60 wt% to 73 wt%;
   Component A2 ranges from 18 wt% to 28 wt%;
   Component A3 range from from 6 wt% to 14 wt%;

4. The polymer composition according to anyone of claims 1-3 wherein the 1-butene ethylene copolymer component B) contains from 3.2 wt% to 3.9 wt% of ethylene derived units.

5. The polymer composition according to anyone of claims 1-4 wherein in component B) the Melt Flow Rate: measured according to ISO 1133-1 -(190 °C, 2.16 Kg) ranges from 2.1 to 4.8 g/10 min.

6. The polymer composition according to anyone of claims 1-5 wherein in component B) the melting temperature measured according to Iso 11357-3 ranges from 84°C and 103 °C.

7. The polymer composition according to anyone of claims 1-6 having a Melt Flow Rate:
measured according to ISO 1133-1 (230 °C, 2.16 Kg) ranging from 2.0 to 12 g/10 min.

8. The polymer composition according to anyone of claims 1-7 having density measured according to ISO 1183-1 ranging from 0.890 g/cm$^3$ to 0.920 g/cm$^3$;

9. The polymer composition according to anyone of claims 1-8 wherein component A1) has ethylene derived units content ranging from 4.8wt% to 7.0 wt%.

10. The polymer composition according to anyone of claims 1-9 wherein component A2) has a density measured according to ISO 1183-1 ranging from ranging from 0.921 g/cm$^3$ to 0.933 g/cm$^3$;

11. The polymer composition according to anyone of claims 1-10 wherein component A3) has ) density measured according to ISO 1183-1 ranging from 0.908 g/cm$^3$ to 0.922 g/cm$^3$.

12. The polymer composition according to anyone of claims 1-11 wherein component A1) has density measured according to ISO 1183-1 ranging from 0.87 g/cm$^3$ to 0.93 g/cm$^3$.

13. The polymer composition according to anyone of claims 1-10 wherein component A3)) has a Melt Flow Rate:
measured according to ISO 1133-1 (190 °C, 2.16 Kg) ranging from 0.2 to 1.0 g/10 min.

14. A film comprising the the polymer composition of claims 1-13.

15. A multilayer film according to claim 14 comprising the the polymer composition of claims 1-13.

**Patentansprüche**

1. Polymerzusammensetzung, umfassend ein 1-Buten-Copolymer, wobei die Zusammensetzung umfasst:

A) 75,0 Gew.% bis 95,0 Gew.% einer Polymerzusammensetzung (A), umfassend:

A1) 56 Gew.% bis 77 Gew.% eines Propylen/Ethylen-Copolymers mit:

i) einer Schmelzflussrate, gemessen gemäß ISO 1133-1, (230 °C, 2,16 kg), im Bereich von 5,1 bis 10,0 g/10 min.;
ii) einer Dichte, gemessen gemäß ISO 1183-1, im Bereich von 0,85 g/cm$^3$ bis 0,96 g/cm$^3$;
iii) einem Biegemodul, gemessen gemäß ISO 178, im Bereich von 350 MPa bis 550 MPa;
iv) einem Ethylengehalt im Bereich von 4,5 Gew.% bis 7,2 Gew.%;

A2) 15 Gew.% bis 32 Gew.% eines Polyethylens mit niedriger Dichte, mit:

i) einer Schmelzflussrate, gemessen gemäß ISO 1133-1, (190 °C, 2,16 kg), im Bereich von 0,33 bis 8,0 g/10 min.;
ii) einer Dichte, gemessen gemäß ISO 1183-1, im Bereich von 0,915 g/cm$^3$ bis 0,938 g/cm$^3$;
iii) einem Zugmodul, gemessen gemäß ISO 527-2, im Bereich von 210 MPa bis 430 MPa;

A3) 4 Gew.% bis 17 Gew.% eines 1-Buten-Homopolymers, mit:

i) einer Schmelzflussrate, gemessen gemäß ISO 1133-1, (190 °C, 2,16 kg), im Bereich von 0,1 bis 2,0 g/10 min.;
ii) einer Dichte, gemessen gemäß ISO 1183-1, im Bereich von 0,905 g/cm$^3$ bis 0,927 g/cm$^3$;
iii) einem Biegemodul, gemessen gemäß ISO 178, im Bereich von 320 MPa bis 580 MPa;

wobei die Summe der Mengen von A1, A2 und A3 100 Gew.% beträgt;

B) 5,0 Gew.% bis 25,0 Gew.% eines Copolymers von 1-Buten und Ethylen, das 2,8 Gew.% bis 4,2 Gew.% von Ethylen abgeleiteten Einheiten enthält; wobei das Copolymer von 1-Buten und Ethylen aufweist:

- eine Schmelzflussrate, gemessen gemäß ISO 1133-1, (190 °C, 2,16 Kg), im Bereich von 1,0 bis 5,5 g/10 min.;
- einen Biegemodul, gemessen gemäß ISO 178, im Bereich von 50 MPa bis 250 MPa;
- eine Schmelztemperatur, gemessen gemäß ISO 11357-3, im Bereich von 83 °C bis 108 °C, Form I,

wobei die Summe der Mengen von A) und B) 100 Gew.% beträgt.

2. Polymerzusammensetzung nach Anspruch 1, wobei Komponente A) im Bereich von 80,2 Gew.% bis 90,4 Gew.% und Komponente B) im Bereich von 9,6 Gew.% bis 19,8 Gew.% liegt.

3. Polymerzusammensetzung nach Anspruch 1 oder 2, wobei:

Komponente A1 im Bereich von 60 Gew.% bis 73 Gew.% liegt;
Komponente A2 im Bereich von 18 Gew.% bis 28 Gew.% liegt;
Komponente A3 im Bereich von 6 Gew.% bis 14 Gew.% liegt.

4. Polymerzusammensetzung nach einem der Ansprüche 1 bis 3, wobei die 1-Buten/Ethylen-Copolymerkomponente B) 3,2 Gew.% bis 3,9 Gew.% von Ethylen abgeleitete Einheiten enthält.

5. Polymerzusammensetzung nach einem der Ansprüche 1 bis 4, wobei in Komponente B) die Schmelzflussrate, gemessen gemäß ISO 1133-1, (190 °C, 2,16 kg), im Bereich von 2,1 bis 4,8 g/10 min liegt.

6. Polymerzusammensetzung nach einem der Ansprüche 1 bis 5, wobei in Komponente B) die Schmelztemperatur, gemessen gemäß ISO 11357-3, im Bereich von 84 °C bis 103 °C liegt.

7. Polymerzusammensetzung nach einem der Ansprüche 1 bis 6 mit einer Schmelzflussrate, gemessen gemäß ISO 1133-1, (230 °C, 2,16 kg), im Bereich von 2,0 bis 12 g/10 min.

8. Polymerzusammensetzung nach einem der Ansprüche 1 bis 7 mit einer Dichte, gemessen gemäß ISO 1183-1, im Bereich von 0,890 g/cm$^3$ bis 0,920 g/cm$^3$.

9. Polymerzusammensetzung nach einem der Ansprüche 1 bis 8, wobei Komponente A1) einen Gehalt an von Ethylen abgeleiteten Einheiten im Bereich von 4,8 Gew.% bis 7,0 Gew.% aufweist.

10. Polymerzusammensetzung nach einem der Ansprüche 1 bis 9, wobei Komponente A2) eine Dichte, gemessen gemäß ISO 1183-1, im Bereich von 0,921 g/cm$^3$ bis 0,933 g/cm$^3$ aufweist.

11. Polymerzusammensetzung nach einem der Ansprüche 1 bis 10, wobei Komponente A3) eine Dichte, gemessen gemäß ISO 1183-1, im Bereich von 0,908 g/cm$^3$ bis 0,922 g/cm$^3$ aufweist.

12. Polymerzusammensetzung nach einem der Ansprüche 1 bis 11, wobei Komponente A1) eine Dichte, gemessen gemäß ISO 1183-1, im Bereich von 0,87 g/cm$^3$ bis 0,93 g/cm$^3$ aufweist.

13. Polymerzusammensetzung nach einem der Ansprüche 1 bis 10, wobei Komponente A3) eine Schmelzflussrate, gemessen gemäß ISO 1133-1, (190 °C, 2,16 kg), im Bereich von 0,2 bis 1,0 g/10 min, aufweist.

14. Film, umfassend die Polymerzusammensetzung nach den Ansprüchen 1 bis 13.

15. Mehrschichtfilm nach Anspruch 14, umfassend die Polymerzusammensetzung nach den Ansprüchen 1 bis 13.

**Revendications**

1. Composition polymère comprenant un copolymère de 1-butène, ladite composition comprenant :

A) 75,0 % en poids à 95,0 % en poids d'une composition polymère (A) comprenant :

A1) 56 % en poids à 77 % en poids d'un copolymère de propylène-éthylène présentant :

i) un indice de fluidité à chaud, mesuré selon la norme ISO 1133-1 (230 °C, 2,16 kg), situé dans la plage de 5,1 à 10,0 g/10 min ;
ii) une masse volumique, mesurée selon la norme ISO 1183-1, située dans la plage de 0,85 g/cm$^3$ à 0,96 g/cm$^3$ ;
iii) un module de flexion, mesuré selon la norme ISO 178, situé dans la plage de 350 MPa à 550 MPa ;
iv) une teneur en éthylène située dans la plage de 4,5 % en poids à 7,2 % en poids ;

A2) 15 % en poids à 32 % en poids d'un polyéthylène basse densité présentant :

i) un indice de fluidité à chaud, mesuré selon la norme ISO 1133-1 (190 °C, 2,16 kg), situé dans la plage de 0,33 à 8,0 g/10 min ;
ii) une masse volumique, mesurée selon la norme ISO 1183-1, située dans la plage de 0,915 g/cm$^3$ à 0,938 g/cm$^3$ ;
iii) un module de traction, mesuré selon la norme ISO 527-2, situé dans la plage de 210 MPa à 430 MPa ;

A3) 4 % en poids à 17 % en poids d'un homopolymère de 1-butène présentant :

i) un indice de fluidité à chaud, mesuré selon la norme ISO 1133-1 (190 °C, 2,16 kg), situé dans la plage de 0,1 à 2,0 g/10 min ;
ii) une masse volumique, mesurée selon la norme ISO 1183-1, située dans la plage de 0,905 g/cm$^3$ à 0,927 g/cm$^3$ ;
iii) un module de flexion, mesuré selon la norme ISO 178, situé dans la plage de 320 MPa à 580 MPa ;

la somme des quantités de A1, A2 et A3 valant 100 % en poids ;

B) 5,0 % en poids à 25,0 % en poids d'un copolymère de 1-butène et d'éthylène contenant 2,8 % en poids à 4,2 % en poids de motifs dérivés d'éthylène ; ledit copolymère de 1-butène et d'éthylène présentant :

- un indice de fluidité à chaud, mesuré selon la norme ISO 1133-1 (190 °C, 2,16 kg), situé dans la plage de 1,0 à 5,5 g/10 min ;
- un module de flexion, mesuré selon la norme ISO 178, situé dans la plage de 50 MPa à 250 MPa ;
- une température de fusion, mesurée selon la norme ISO 11357-3, située dans la plage de 83 °C à 108 °C, forme I

la somme des quantités de A) et B) valant 100 % en poids.

2. Composition polymère selon la revendication 1, dans laquelle le constituant A représente 80,2 % en poids à 90,4 % en poids et le constituant B) représente 9,6 % en poids à 19,8 % en poids.

3. Composition polymère selon les revendications 1 ou 2, dans laquelle :

le constituant A1 représente 60 % en poids à 73 % en poids ;
le constituant A2 représente 18 % en poids à 28 % en poids ;
le constituant A3 représente 6 % en poids à 14 % en poids.

4. Composition polymère selon l'une quelconque des revendications 1 à 3, dans laquelle le constituant B) de copolymère de 1-butène et d'éthylène contient 3,2 % en poids à 3,9 % en poids de motifs dérivés d'éthylène.

5. Composition polymère selon l'une quelconque des revendications 1 à 4, dans laquelle, dans le constituant B), l'indice de fluidité à chaud, mesuré selon la norme ISO 1133-1 (190 °C, 2,16 kg), est situé dans la plage de 2,1 à 4,8 g/10 min.

6. Composition polymère selon l'une quelconque des revendications 1 à 5 dans laquelle, dans le constituant B), la température de fusion, mesurée selon la norme ISO 11357-3, est située dans la plage de 84 °C à 103 °C.

**7.** Composition polymère selon l'une quelconque des revendications 1 à 6, présentant un indice de fluidité à chaud, mesuré selon la norme ISO 1133-1 (230 °C, 2,16 kg), situé dans la plage de 2,0 à 12 g/10 min.

**8.** Composition polymère selon l'une quelconque des revendications 1 à 7, présentant une masse volumique, mesurée selon la norme ISO 1183-1, située dans la plage de 0,890 g/cm$^3$ à 0,920 g/cm$^3$.

**9.** Composition polymère selon l'une quelconque des revendications 1 à 8, dans laquelle le constituant A1) présente une teneur en motifs dérivés de l'éthylène située dans la plage de 4,8 % en poids à 7,0 % en poids.

**10.** Composition polymère selon l'une quelconque des revendications 1 à 9, dans laquelle le constituant A2) présente une masse volumique, mesurée selon la norme ISO 1183-1, située dans la plage de 0,921 g/cm$^3$ à 0,933 g/cm$^3$.

**11.** Composition polymère selon l'une quelconque des revendications 1 à 10, dans laquelle le constituant A3) présente une masse volumique, mesurée selon la norme ISO 1183-1, située dans la plage de 0,908 g/cm$^3$ à 0,922 g/cm$^3$.

**12.** Composition polymère selon l'une quelconque des revendications 1 à 11, dans laquelle le constituant A1) présente une masse volumique, mesurée selon la norme ISO 1183-1, située dans la plage de 0,87 g/cm$^3$ à 0,93 g/cm$^3$.

**13.** Composition polymère selon l'une quelconque des revendications 1 à 10, dans laquelle le constituant A3) présente un indice de fluidité à chaud, mesuré selon la norme ISO 1133-1 (190 °C, 2,16 kg), situé dans la plage de 0,2 à 1,0 g/10 min.

**14.** Film comprenant la composition polymère selon les revendications 1-13.

**15.** Film multicouche selon la revendication 14, comprenant la composition polymère selon les revendications 1-13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015061440 A

**Non-patent literature cited in the description**

- **C. J. CARMAN ; R. A. HARRINGTON ; C. E. WILKES.** Monomer Sequence Distribution in Ethylene-Propylene Rubber Measured by C NMR. 3. Use of Reaction Probability Mode. *Macromolecules,* 1977, vol. 10, 536

- **M. KAKUGO ; Y. NAITO ; K. MIZUNUMA ; T. MIY-ATAKE.** Carbon-13 NMR determination of monomer sequence distribution in ethylene-propylene copolymers prepared with δ-titanium trichloride-diethylaluminum chloride. *Macromolecules,* 1982, vol. 15, 1150